# EUROPEAN PATENT APPLICATION

(11) **EP 2 930 347 A1**
(43) Date of publication of application: **14.10.2015**
(21) Application number: 14196770.3
(22) Date of filing: 08.12.2014
(51) Int. Cl.: F02N 11/08, F02N 11/04

(54) **Start-up/power generation system of saddle-straddling type motor vehicle**

(30) Priority: 08.04.2014 JP 2014079395
(71) Applicant: Yamaha Hatsudoki Kabushiki Kaisha, Iwata-shi, Shizuoka-ken 438-8501 (JP)
(72) Inventor: Fukuda, Shiro, Shizuoka-ken, 438-8501 (JP)
(74) Representative: Zimmermann, Tankred Klaus

(57) **Abstract**

An inverter circuit (61) is connected to a starter/generator (20). The inverter circuit (61) is connected to a battery (7) through a motor line (L1), and is connected to the battery (7) through a generator line (L2). A starter relay (R1) is provided at the motor line (L1), and a charge relay (R2) is provided at the generator line (L2). Further, a DC-DC converter (62) that adjusts a voltage supplied from the inverter circuit (61) to the battery (7) is provided at the generator line (L2), and a load group (G1) is connected to the generator line (L2).

## Description

### BACKGROUND OF THE INVENTION

### Field of the Invention

The present invention relates to a start-up/power generation system of a saddle straddling type motor vehicle.

### Description of Related Art

In the saddle-straddling type motor vehicle such as a motorcycle, a generator having the function of a starter motor (hereinafter referred to as a starter/generator) is used for a weight reduction of the vehicle and highly efficient quiet start-up of an engine. In such a starter/generator, because it is necessary to have capability for generating a large torque in functioning as the starter motor, power generating capability may become excessive in functioning as the generator.

In a control device of a motor generator for a motorcycle described in JP 4761370 B2, an ACG starter having a three-phase winding is connected to an inverter circuit. The inverter circuit is connected to a function switching relay through a motor line, and is connected to the function switching relay through a generator line. The generator line includes a DC-DC converter. The function switching relay sets one of the motor line and the generator line to a connected state and the other one to a disconnected state. Thus, a battery is connected to the inverter circuit through one of the motor line and the generator line.

When the ACG starter functions as the generator, the battery is connected to the inverter circuit through the generator line. On the other hand, when the ACG starter functions as a motor, the battery is connected to the inverter circuit through the motor line. Thus, excessive power generation is inhibited by the DC-DC converter during power generation.

### BRIEF SUMMARY OF THE INVENTION

An object of the present invention is to provide a start-up/power generation system of a saddle-straddling type motor vehicle in which a decrease in a remaining amount of a battery can be inhibited.

This object is achieved by a start-up/power generation system according to claim 1.

The invention is based on the finding that in the above-mentioned control device, even when a main switch is turned off, a leak current path is formed by an electrolytic capacitor connected to the inverter circuit or the DC-DC converter. Therefore, a remaining amount of the battery decreases due to an occurrence of a leak current.
(1) A start-up/power generation system of a saddle-straddling type motor vehicle according to one aspect of the present invention includes an engine, a starter/generator having a function for rotating a crankshaft of the engine and a function for generating power by a rotation of the crankshaft, a battery, an inverter circuit connected to the starter/generator, a first path for supplying power from the battery to the inverter circuit, a second path for supplying power from the inverter circuit to the battery, a DC-DC converter that is provided at the second path and adjusts a voltage supplied from the inverter circuit to the battery, a first switch that is provided at the first path and is switched between a connected state in which the battery is electrically connected to the inverter circuit and a disconnected state in which the battery is electrically disconnected from the inverter circuit, a second switch that is provided at the second path and is switched between a connected state in which the battery is electrically connected to the inverter circuit and a disconnected state in which the battery is electrically disconnected from the inverter circuit, and a load that is electrically connected to the second path.
   In this start-up/power generation system, the first switch is kept in the connected state and the second switch is kept in the disconnected state, whereby the battery is electrically connected to the inverter circuit through the first path, and power is supplied to the starter/generator. Thus, the crankshaft is rotated by the starter/generator.
   The first switch is kept in the disconnected state and the second switch is kept in the connected state after complete explosion of the engine, whereby the battery is electrically connected to the inverter circuit through the second path and the power generated by the starter/generator is supplied to the battery. The complete explosion means that the engine proceeds to a state in which the crankshaft is stably driven only by the combustion of a fuel-air mixture without requiring driving force by the starter/generator. In this case, the voltage supplied from the inverter circuit to the battery is adjusted by the DC-DC converter. Therefore, the voltage supplied to the battery can be appropriately adjusted while an increase in a phase current of the starter/generator by weak magnetic field control is inhibited. In this case, a copper loss due to the phase current can be decreased, and the power generation efficiency by the starter/generator is improved. Thus, fuel expenses can be decreased.
   Further, because the first switch and the second switch are separately respectively provided at the first path and the second path, the first switch and the second switch can be independently switched between the connected state and the disconnected state. In this case, at the time of the stop of the engine, both of the first switch and the second switch can be kept in the disconnected state. Thus, formation of the leak current path can be prevented, and a decrease in the remaining amount of the battery due to an occurrence of the leak current can be inhibited.
   Further, when a power supply path between the battery and the inverter circuit is switched from the first path to the second path, both of the first switch and the second switch can be temporarily kept in the connected state. In this case, because there is no period in which the battery and the inverter circuit are electrically disconnected from each other, a temporary increase in the voltage is prevented. Therefore, it is not necessary to inhibit an increase in the voltage by a short brake (a short-circuit brake), for example, and the starter/generator is prevented from fluctuating the rotation of the crankshaft.
   Further, because the load is electrically connected to the second path, the power generated by the starter/generator can be continuously supplied to the load. Thus, when load dump (uncoupling of the battery) occurs, or when a rider turns off the main switch during the travelling of the vehicle, a sharp increase in the voltage does not occur. Therefore, the inverter circuit and the DC-DC converter are prevented from being damaged.
(2) The start-up/power generation system may further include a main switch operable by a rider, wherein the DC-DC converter may be connected between the inverter circuit and the second switch, and both of the first switch and the second switch may be kept in the disconnected state with the main switch being turned off.
   In this case, in a state in which the main switch is turned off, the battery is electrically disconnected from the inverter circuit and the DC-DC converter. Thus, an occurrence of the leak current is prevented, and a decrease in the remaining amount of the battery is inhibited.
(3) The start-up/power generation system may further include a switching controller that controls the first switch and the second switch, wherein the switching controller may control the first switch and the second switch such that the first switch is kept in the connected state and the second switch is kept in the disconnected state from a first time point at which the engine is started to a second time point at which a predetermined first condition is satisfied, both of the first switch and the second switch may be kept in the connected state from the second time point to a third time point at which a predetermined second condition is satisfied, and the first switch may be kept in the disconnected state and the second switch may be kept in the connected state from the third time point.
   In this case, the battery is electrically connected to the inverter circuit through the first path from the first time point to the second time point. In this state, the crankshaft is rotated by the starter/generator. Subsequently, both of the first switch and the second switch are temporarily kept in the connected state from the second time point to the third time point. Thereafter, the battery is electrically connected to the inverter circuit through the second path from the third time point. In this state, the power generated by the starter/generator is supplied to the battery.
   In this manner, when the power supply path between the battery and the inverter circuit is switched from the first path to the second path, because both of the first switch and the second switch are temporarily kept in the connected state, the battery and the inverter circuit are not electrically disconnected from each other. Thus, it is not necessary to inhibit an increase in the voltage by the short brake, and the starter/generator is prevented from fluctuating the rotation of the crankshaft.
(4) The start-up/power generation system may further include a rotation speed detector that detects a rotation speed of the crankshaft, wherein the first condition may be that the rotation speed detected by the rotation speed detector reaches a predetermined value.
   In this case, when the rotation speed of the crankshaft reaches the predetermined value, the second switch is switched to the connected state. Thus, the power supply path can be switched at a time point at which the operation of the engine is stabilized.
(5) The second condition may be that a predetermined time period has elapsed since the second time point.
   In this case, both of the first switch and the second switch are kept in the connected state for the predetermined time period at the time of the switching of the power supply path. Thus, an increase in the voltage can be prevented by simple control without a short brake.
(6) The start-up/generation system may further include a converter controller for adjusting a duty ratio of the DC-DC converter such that a copper loss in the starter/generator decreases from the third time point.
   In this case, the voltage supplied from the inverter circuit to the battery can be stably adjusted with high efficiency.
(7) The load may be connected to the second path between the DC-DC converter and the second switch.
   In this case, even when the second switch is switched to the disconnected state with power being generated by the starter/generator, the generated power is continuously supplied to the load. Therefore, a sharp increase in the voltage does not occur. Therefore, the inverter circuit and the DC-DC converter are prevented from being damaged.
(8) The load does not have to be involved in operation of the engine.
   In this case, when the second switch is switched to the disconnected state with power being generated by the starter/generator, the operation of the engine is stopped while the power is continuously supplied to the load. Thus, damage to the inverter circuit and the DC-DC converter due to a sharp increase in the voltage can be prevented while unstable operation of the engine is prevented.

### BRIEF DESCRIPTION OF THE SEVERAL VIEWS OF THE DRAWING

Fig. 1 is a schematic side view showing the schematic configuration of a motorcycle according to one embodiment of the present invention;
Fig. 2 is a circuit diagram showing an electric system of the motorcycle;
Fig. 3 is a block diagram for explaining a function realized by a CPU;
Fig. 4 is a circuit diagram showing an inverter circuit and a DC-DC converter;
Fig. 5 is a diagram for explaining the switching between on and off of a starter relay and a charge relay;
Fig. 6 is a diagram showing a change in an inverter voltage;
Fig. 7 is a flow chart of an engine start-up process; and
Fig. 8 is a flow chart of an engine start-up process.

### DESCRIPTION OF THE PREFERRED EMBODIMENTS

A motorcycle having a start-up/power generation system according to embodiments of the present invention will be described below with reference to the drawings. The motorcycle according to the present embodiment is one example of a saddle-straddling type motor vehicle.

### (1) Motorcycle

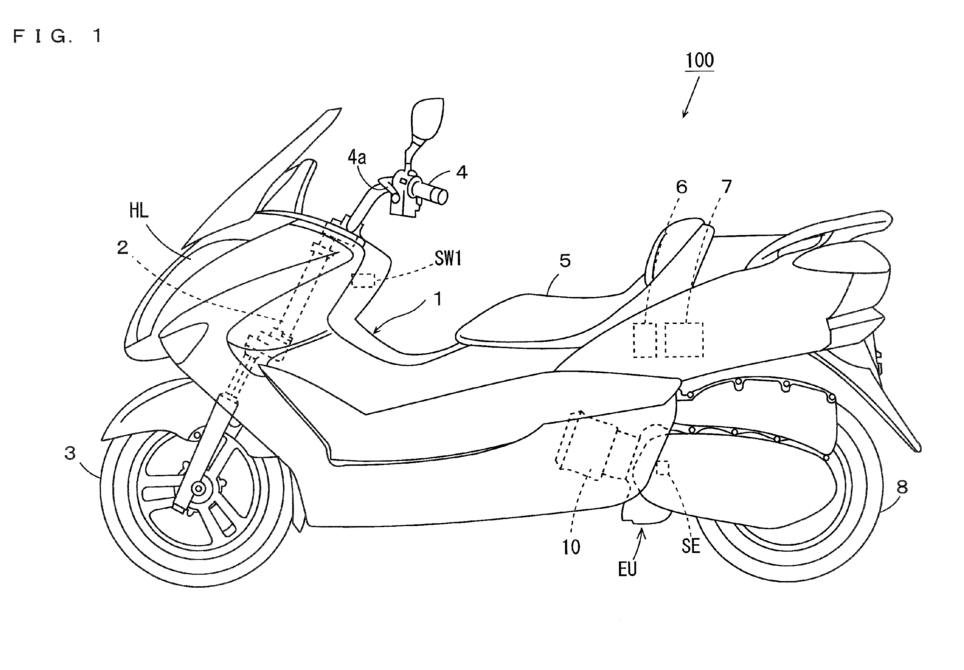

Fig. 1 is a schematic side view showing the schematic configuration of the motorcycle according to one embodiment of the present invention. In the motorcycle 100 of Fig. 1, a front fork 2 is provided at a front portion of a vehicle body 1 to be swingable to the right and left. A handle 4 is attached to the upper end of the front fork 2, and a front wheel 3 is attached to the lower end of the front fork 2 to be rotatable. A brake lever 4a is provided at the handle 4. A headlamp HL is provided at the front end of the vehicle body 1. A main switch SW1 is provided below the handle 4. The main switch SW1 is switched between on and off by a main key (not shown).

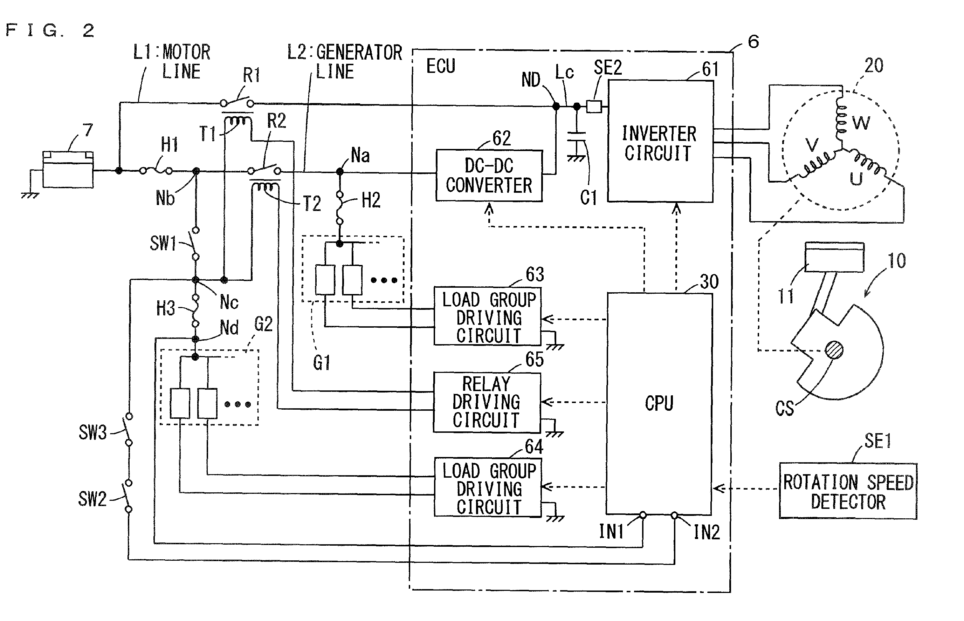

A seat 5 is provided at an upper portion of substantially the center of the vehicle body 1. An ECU (Engine Control Unit) 6 and a battery 7 are arranged below the seat 5. Further, an engine unit EU is provided below them. The engine unit EU includes an engine 10 and a starter/generator 20 (Fig. 2) that is described below. A rotation speed detector SE1 is provided at the engine 10. The rotation speed of the engine 10 (the rotation speed of a crankshaft CS of Fig. 2) is detected by the rotation speed detector SE1. A rear wheel 8 is attached to a lower portion of the rear end of the vehicle body 1 to be rotatable. The rotation of the rear wheel 8 is driven by the motive power generated by the engine 10.

### (2) Electrical System

Fig. 2 is a circuit diagram showing the electrical system of the motorcycle 100. As shown in Fig. 2, the motorcycle 100 includes the starter/generator 20. The starter/generator 20 includes stator coils U, V, W of a U phase, a V phase and a W phase, has a function as a three-phase synchronous motor (a starter motor) for rotating the crankshaft CS of the engine 10, and has a function as a three-phase synchronous generator for generating electric power by the rotation of the crankshaft CS of the engine 10.

The ECU 6 includes an inverter circuit 61, a DC-DC converter 62, load group driving circuits 63, 64, a relay driving circuit 65 and a CPU (Central Processing Unit) 30. Additionally, the ECU 6 includes a storage such as a ROM (Read Only Memory) and a RAM (Random Access Memory).

The inverter circuit 61 is connected to the stator coils U, V, W of the starter/generator 20. Further, the inverter circuit 61 is connected to a node ND through a common line Lc. The node ND is connected to a plus terminal of the battery 7 through a motor line (a line for a motor) L1, and is connected to the plus terminal of the battery 7 through a generator line (a line for a generator) L2. A minus terminal of the battery 7 is connected to a ground line.

The motor line L1 includes a starter relay R1. The generator line L2 includes the DC-DC converter 62, a charge relay R2 and a fuse H1. The DC-DC converter 62 is connected between the node ND and a node Na, and the charge relay R2 is connected between the node Na and a node Nb. The fuse H1 is connected between the node Nb and the plus terminal of the battery 7. An electrolytic capacitor C1 is connected between the common line Lc and a ground line. A current detector SE2 is provided at the common line Lc. A value of the current flowing between the battery 7 and the inverter circuit 61 is detected by the current detector SE2.

When the starter/generator 20 functions as the starter motor, the power of the battery 7 is supplied to the inverter circuit 61 through the motor line L1. On the other hand, when the starter/generator 20 functions as the generator, the power generated by the starter/generator 20 is supplied to the battery 7, and load groups G1, G2 that are described below from the inverter circuit 61 through the generator line L2. In the generator line L2, the voltage supplied from the inverter circuit 61 to the battery 7 can be adjusted by the DC-DC converter 62.

The load group G1 is connected to the node Na of the generator line L2 through a fuse H2. The load group G1 includes various loads that are not involved in the operation of the engine 10. For example, the load group G1 includes the headlamp HL (Fig. 1) and the like. The load group driving circuit 63 of the ECU 6 drives each load included in the load group G1.

The main switch SW1 is connected between the node Nb of the generator line L2 and a node Nc. A fuse H3 is connected between the node Nc and a node Nd, and the load group G2 is connected to the node Nd. The load group G2 includes various loads that are involved in the operation of the engine 10. For example, the load group G2 includes an injector, an ignition plug and the like. The load group driving circuit 64 of the ECU 6 drives each load included in the load group G2.

The relay driving circuit 65 of the ECU 6 is connected to the node Nc through a relay coil T1, and is connected to the node Nc through a relay coil T2. The relay driving circuit 65 switches the starter relay R1 and the charge relay R2 between on and off by controlling the energization to the relay coils T1, T2. The starter relay R1 is turned on when the relay coil T1 is energized, and the starter relay R1 is turned off when the relay coil T1 is not energized. Similarly, the charge relay R2 is turned on when the relay coil T2 is energized, and the charge relay R2 is turned off when the relay coil T2 is not energized.

The CPU 30 has input terminals IN1, IN2. The input terminal IN1 is connected to the node Nd. The input terminal IN2 is connected to the node Nc through a starter switch SW2 and a brake switch SW3. The starter switch SW2 is provided at the handle 4 of Fig. 1, and is turned on by the operation of a rider. Further, the brake switch SW3 is turned on when the brake lever 4a of Fig. 1 is operated by the rider.

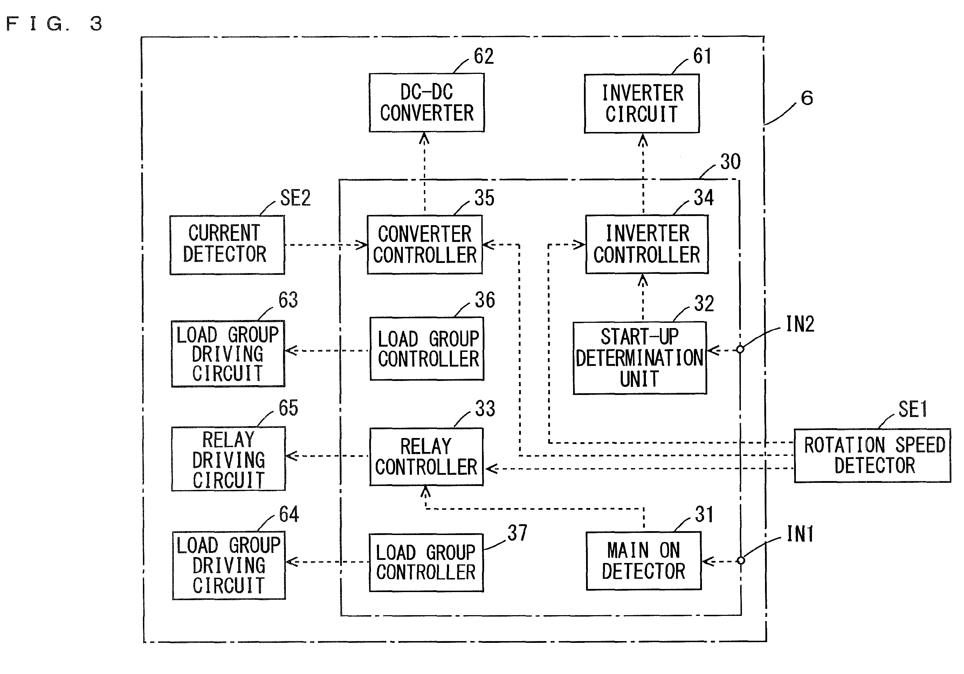

Fig. 3 is a block diagram for explaining the function that is realized by the CPU 30. As shown in Fig. 3, the CPU 30 realizes the functions of a main ON detector 31, a start-up determination unit 32, a relay controller 33, an inverter controller 34, a converter controller 35 and load group controllers 36, 37.

The main ON detector 31 detects that the main switch SW1 of Fig. 2 is turned on. Specifically, when the main switch SW1 of Fig. 2 is turned on, the voltage of the battery 7 is supplied to the input terminal IN1. Thus, the voltage of the input terminal IN1 increases. The main ON detector 31 of Fig. 3 detects that the main switch SW1 is turned on based on the voltage of the input terminal IN1.

Power is supplied from the battery 7 to the ECU 6 when the main switch SW1 of Fig. 2 is turned on. Thus, the CPU 30, the load group driving circuits 63, 64 and the relay driving circuit 65 become operable, respectively.

When the brake switch SW3 is turned on and the starter switch SW2 is also turned on with the main switch SW1 being turned on, the engine 10 is started. The start-up determination unit 32 of Fig. 3 determines whether the starter switch SW2 and the brake switch SW3 are turned on or off with the main switch SW1 being turned on. Specifically, when the starter switch SW2 and the brake switch SW3 are turned on with the main switch SW1 of Fig. 2 being turned on, the voltage of the battery 7 is supplied to the input terminal IN2. The start-up determination unit 32 determines whether the starter switch SW2 and the brake switch SW3 are turned on or off based on the voltage of the input terminal IN2.

The relay controller 33 of Fig. 3 controls the relay driving circuit 65 based on the result of the detection of the rotation speed detector SE1 and the result of the detection of the main ON detector 31. The inverter controller 34 controls the inverter circuit 61 based on the result of the determination by the start-up determination unit 32. The converter controller 35 controls the DC-DC converter 62 based on the results of the detection of the rotation speed detector SE1 and the current detector SE2. The load group controllers 36, 37 control the load group driving circuits 63, 64, respectively. The control of the relay driving circuit 65, the inverter circuit 61 and the DC-DC converter 62 will be described below.

### (3) Inverter Circuit and DC-DC Converter

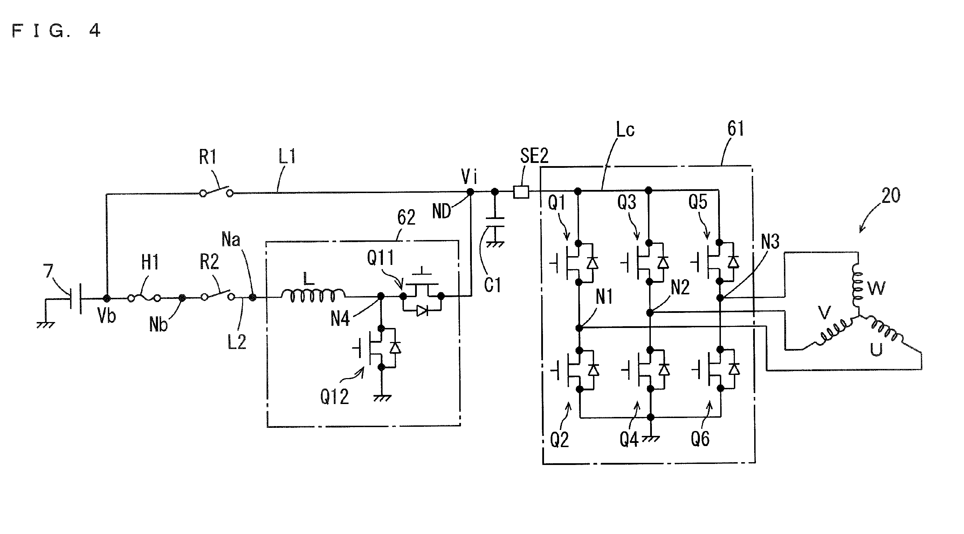

Fig. 4 is a circuit diagram showing the inverter circuit 61 and the DC-DC converter 62. As shown in Fig. 4, the inverter circuit 61 includes switching elements Q1, Q2, Q3, Q4, Q5, Q6. Each of the switching elements Q1 to Q6 is a FET (Field Effect Transistor), for example.

The switching elements Q1, Q3, Q5 are connected between the common line Lc and nodes N1, N2, N3, respectively. The switching elements Q2, Q4, Q6 are connected between the nodes N1, N2, N3 and the ground line, respectively. One end of the stator coil U, one end of the stator coil V and one end of the stator coil W are connected to the nodes N1, N2, N3.

The switching elements Q1 to Q6 of Fig. 4 are controlled to be turned on and off by the inverter controller 34 of Fig. 3. At the time of the start-up of the engine 10, the switching elements Q1 to Q6 are controlled to be turned on and off such that the starter/generator 20 functions as the three-phase synchronous motor. After complete explosion of the engine 10, the switching elements Q1 to Q6 are controlled to be turned on and off such that the starter/generator 20 functions as the three-phase synchronous generator. Here, the complete explosion means that the engine 10 proceeds to a state in which the crankshaft CS is stably driven only by the combustion of a fuel-air mixture without requiring the driving force by the starter/generator 20.

Further, after the complete explosion of the engine 10, the generated power by the starter/generator 20 is controlled by magnetic field control. Here, the magnetic field control means that the generated power by the starter/generator 20 is controlled by the change of a phase during a conducting period of each of the switching elements Q1 to Q6 with respect to a phase of an induced voltage of each phase. Specifically, in the magnetic field control, switching timing between on and off of the switching elements Q1, Q2, switching timing between on and off of the switching elements Q3, Q4 and switching timing between on and off of the switching elements Q5, Q6 are advanced or retarded with respect to the phases of the induced voltages of the U phase, the V phase and the W phase, respectively. Thus, the generated power by the starter/generator 20 is controlled.

In the present example, the phases of the switching timing between on and off of the switching elements Q1 to Q6 are respectively advanced after the complete explosion of the engine 10, whereby the generated power is decreased. Hereinafter, such magnetic field control for decreasing the generated power is referred to as weak magnetic field control. Further, a phase current flowing during the weak magnetic field control is referred to as a weak magnetic field current. The larger the amount of reduction in the generated power by the weak magnetic field control is, the larger the weak magnetic field current is.

The DC-DC converter 62 includes switching elements Q11, Q12 and an inductor L. In the present example, each of the switching elements Q11, Q12 is the FET. The switching element Q11 is connected between the node ND and a node N4, and the inductor L is connected between the node N4 and the node Na. Further, the switching element Q12 is connected between the node N4 and a ground line.

The switching elements Q11, Q12 of Fig. 4 are controlled to be turned on and off by the converter controller 35 of Fig. 3. The switching elements Q11, Q12 are switched between on and off periodically. The switching element Q12 is turned off during a period in which the switching element Q11 is turned on, and the switching element Q11 is turned off during a period in which the switching element Q12 is turned on. The ratio of the period in which the switching element Q12 is turned on in one cycle is referred to as a duty ratio (a duty cycle) of the DC-DC converter 62.

### (4) Switching of Relay

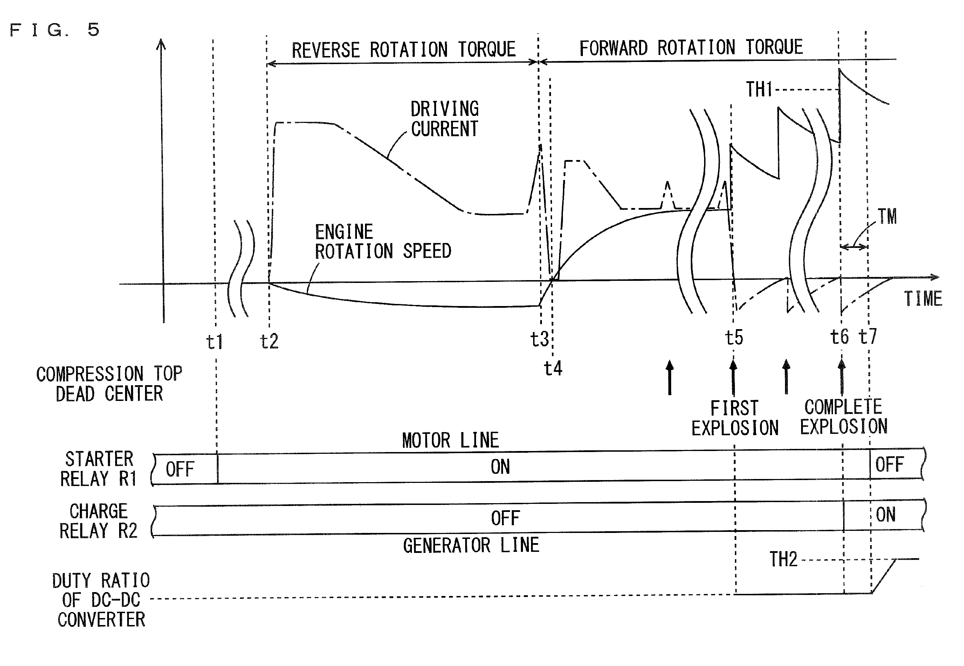

The switching between on and off of the starter relay R1 and the charge relay R2 will be described. Fig. 5 is a diagram for explaining the switching between on and off of the starter relay R1 and the charge relay R2. In the upper part of the diagram of Fig. 5, the change in the rotation speed of the engine 10, and the change in the current flowing from the battery 7 to the inverter circuit 61 (hereinafter referred to as a driving current) are shown. The abscissa indicates time, and the ordinate indicates the rotation speed of the engine 10 and the driving current. The solid line indicates the change in the rotation speed of the engine 10, and the one-dotted line indicates the change in the driving current. When the crankshaft CS (Fig. 2) is rotated forward, the rotation speed of the engine 10 is indicated by a positive value, and when the crankshaft CS is rotated in reverse, the rotation speed of the engine 10 is indicated by a negative value. In the following description, a torque in the direction of the forward rotation of the crankshaft CS is referred to as a forward rotation torque, and a torque in the direction of the reverse rotation of the crankshaft CS is referred to as a reverse rotation torque.

When the crankshaft CS is driven by the starter/generator 20, the driving current is a positive value. In this case, a current is supplied from the battery 7 to the starter/generator 20. On the other hand, when the crankshaft CS is driven by the combustion of the fuel-air mixture in the engine 10, the driving current is a negative value. In this case, power is generated by the starter/generator 20.

In the lower part of the diagram of Fig. 5, time points at which a piston 11 (Fig. 2) reaches a compression top dead center are indicated by the upward arrows, and turning on and off of the starter relay R1 and the charge relay R2, and the change in the duty ratio of the DC-DC converter 62 are shown.

In the example of Fig. 5, at the time of the start-up of the engine 10, the crankshaft CS is rotated forward after being rotated in reverse in a constant angular range. In this case, even when the piston 11 is stopped right before reaching the compression top dead center, the forward rotation of the crankshaft CS is started after the piston 11 is moved by the reverse rotation of the crankshaft CS. Therefore, it is possible to increase the rotation speed of the crankshaft CS before the piston 11 reaches the first compression top dead center since the forward rotation of the crankshaft CS was started. Therefore, this causes the piston 11 to easily reach the first compression top dead center, so that startability of the engine 10 is enhanced.

In Fig. 5, the main switch SW1 (Fig. 2) is turned off before a time point t1. In a state in which the main switch SW1 is turned off as described above, power is not supplied to the ECU 6. Therefore, the energization to the relay coils T1, T2 by the relay driving circuit 65 of Fig. 2 is not performed either, and the starter relay R1 of the motor line L1 and the charge relay R2 of the generator line L2 are kept turned off, respectively.

When the main switch SW1 is turned on at the time point t1, the starter relay R1 of the motor line L1 is turned on. At a time point t2, the starter switch SW2 is turned on with the brake switch SW3 being turned on. Thus, the inverter circuit 61 (Fig. 2) is controlled such that the reverse rotation of the crankshaft CS by the starter/generator 20 is started. In this case, the driving current gently decreases after sharply increasing. Thereafter, the piston 11 comes close to the compression top dead center, so that the pressure in a combustion chamber of the engine 10 increases. Thus, a rotational load of the crankshaft CS increases, and the driving current sharply increases.

The torque supplied from the starter/generator 20 to the crankshaft CS is switched from the reverse rotation torque to the forward rotation torque right before the piston 11 reaches the compression top dead center. In the present example, at a time point t3, when the driving current exceeds a predetermined threshold value, the torque supplied from the starter/generator 20 to the crankshaft CS is switched from the reverse rotation torque to the forward rotation torque. The crankshaft CS is rotated in reverse by inertia during the period from the time point t3 to a time point t4. The crankshaft CS is rotated forward from the time point t4.

After the forward rotation of the crankshaft CS is started, the driving current temporarily increases every time the piston 11 reaches the compression top dead center. At a time point t5, the fuel-air mixture in the combustion chamber is ignited when the piston 11 reaches the compression top dead center, and the crankshaft CS is driven by the combustion of the fuel-air mixture. In this case, the rotation speed of the crankshaft CS gently falls after instantaneously increasing. Further, the driving current gently increases after instantaneously decreasing to a negative value. Hereinafter, first combustion of the fuel-air mixture after the forward rotation of the crankshaft CS is started is referred to as initial explosion.

Thereafter, the rotation speed of the crankshaft CS increases by the combustion of the fuel-air mixture every time the piston 11 reaches the compression top dead center. Thus, the rotation speed of the crankshaft CS increases in steps. Further, the driving current decreases every time the fuel-air mixture is combusted. At a time point t6, the rotation speed of the crankshaft CS exceeds a predetermined threshold value TH1. The threshold value TH1 is equivalent to the rotation speed of the crankshaft CS at which the complete explosion of the engine 10 occurs.

At the time point t6, the charge relay R2 of the generator line L2 is turned on. At a time point t7 at which a predetermined time period TM has elapsed since the time point t6, the starter relay R1 of the motor line L1 is turned off. The DC-DC converter 62 does not operate until the time point t5. In this case, the switching elements Q11, Q12 of Fig. 4 are kept turned off, respectively. The DC-DC converter 62 operates at the time point t5, and the duty ratio of the DC-DC converter 62 is kept at 0 or a value close to 0 during the period from the time point t5 to the time point t7. When a driver (not shown) of each of the switching elements Q11, Q12 is a boot strapping type, the duty ratio of the DC-DC converter 62 cannot be kept exactly at 0, so that the duty ratio is kept at a value close to 0.

The duty ratio of the DC-DC converter 62 is increased from the time point t7 in accordance with an increase in the rotation speed of the engine 10, and the duty ratio is adjusted such that a copper loss in the starter/generator 20 is the minimum. After the duty ratio reaches an adjustable upper limit value TH2, the duty ratio of the DC-DC converter 62 is kept at the upper limit value TH2 even when the rotation speed of the engine 10 increases.

In a case in which the main switch SW1 is turned off when the engine 10 is stopped, the energization to the relay coil T2 by the relay driving circuit 65 (Fig. 2) is stopped. Therefore, the charge relay R2 of the generator line L2 is turned off. Further, the starter relay R1 of the motor line L1 is kept turned off.

In this manner, during the period from the time point t2 at which the crankshaft CS is driven by the starter/generator 20 to the time point t6, the starter relay R1 of the motor line L1 is kept turned on, and the charge relay R2 of the generator line L2 is kept turned off. Thus, power is supplied from the battery 7 to the inverter circuit 61 through the motor line L1.

The charge relay R2 of the generator line L2 is kept turned on after the time point t6 at which the complete explosion of the engine 10 occurs. Thus, power is supplied from the inverter circuit 61 to the battery 7 through the generator line L2. In this case, the voltage supplied from the inverter circuit 61 to the battery 7 can be adjusted to a low level by the DC-DC converter 62 of the generator line L2. Thus, an appropriate voltage can be stably supplied to the battery 7 and various loads included in the load groups G1, G2.

Further, the starter relay R1 of the motor line L1 is turned off at the time point t7 at which the constant time period TM has elapsed after the charge relay R2 of the generator line L2 is turned on at the time point t6. In this case, because there is no period in which the inverter circuit 61 and the battery 7 are electrically disconnected from each other, a temporary increase in the voltage of the starter/generator 20 is prevented. Therefore, it is not necessary to inhibit an increase in the voltage by a short brake (a short-circuit brake), for example, and the starter/generator 20 is prevented from fluctuating the rotation of the crankshaft CS.

Further, when the starter relay R1 of the motor line L1 is turned off at the time point t7, the duty ratio of the DC-DC converter 62 is increased in accordance with an increase in the rotation speed of the engine 10, and the duty ratio is adjusted such that the copper loss in the starter/generator 20 is the minimum. In this case, because a voltage is supplied to the battery 7 only through the generator line L2, the voltage supplied to the battery 7 and various loads can be accurately adjusted while the copper loss in the starter/generator 20 is inhibited.

In a vehicle and the like that automatically performs an idle stop, the engine 10 is stopped with the main switch SW1 not being turned off. In this case, switching on and off of the starter relay R1 and the charge relay R2 during the idle stop may be performed based on the rotation speed of the engine 10. For example, a value lower than the threshold value TH1 of Fig. 5 is set as a threshold value for determining to stop the engine 10 (hereinafter referred to as a stop threshold value). When the rotation speed of the engine 10 becomes lower than the stop threshold value after the complete explosion of the engine 10, the engine 10 is determined to be stopped and the charge relay R2 is turned off.

At a time point at which the rotation speed of the engine 10 becomes lower than the stop threshold value, the starter relay R1 may be turned on when the charge relay R2 is turned off. In this case, the re-start of the engine 10 after the idle stop can be quickly performed similarly to the start-up of the engine 10 from the time point t2.

### (5) Adjustment of Inverter Voltage by Inverter Circuit 61

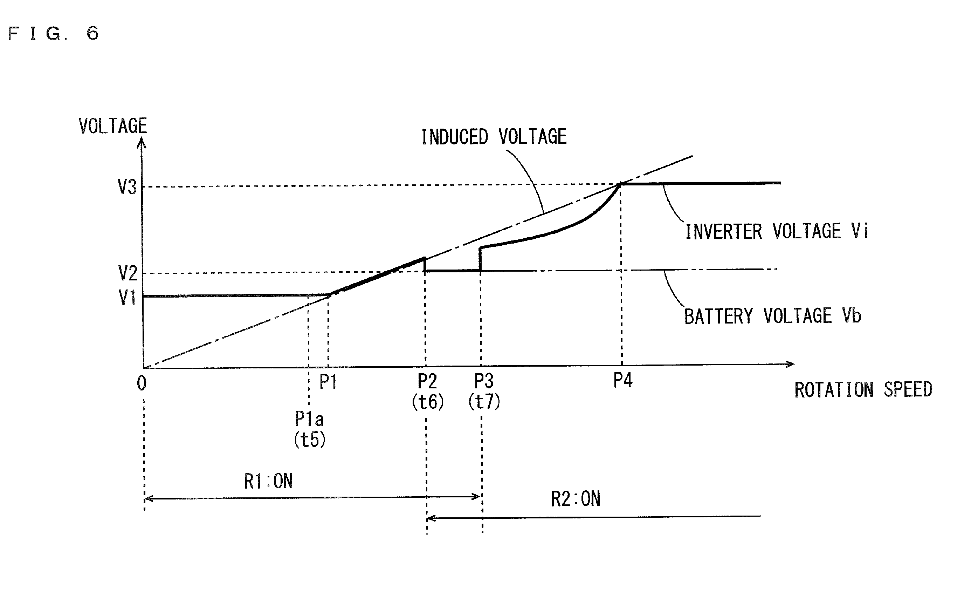

Hereinafter, the voltage of the node ND of Fig. 4 is referred to as an inverter voltage Vi. Further, the voltage of the plus terminal of the battery 7 is referred to as a battery voltage Vb. Fig. 6 is a diagram showing the change in the inverter voltage. In Fig. 6, the abscissa indicates the rotation speed of the engine 10, and the ordinate indicates the voltage. In Fig. 6, an induced voltage (an effective value) in the starter/generator 20 is indicated by the one-dotted line.

As described above, the starter relay R1 is turned on at the time of the start of the rotation of the engine 10. Thus, the node ND is connected to the plus terminal of the battery 7. Therefore, in the example of Fig. 6, the voltage V1 of the battery 7 is added to the node ND and the inverter voltage Vi becomes the V1 until the rotation speed of the engine 10 reaches a P1. In this case, the battery voltage Vb is also the V1. A rotation speed P1 is higher than a rotation speed P1 a at the time point t5 of Fig. 5 at which the initial explosion occurs. The DC-DC converter 62 operates when the rotation speed of the engine 10 reaches the rotation speed P1a. In this case, the duty ratio of the DC-DC converter 62 is kept at 0 or a value close to 0.

The induced voltage in the starter/generator 20 linearly increases as the rotation speed of the engine 10 increases. When the rotation speed of the engine 10 reaches the P1, the induced voltage reaches the V1. The inverter voltage Vi increases in accordance with the increase in the induced voltage from the time when the rotation speed of the engine 10 reaches the P1 until the time when the rotation speed of the engine 10 reaches a P2. The rotation speed P2 is equivalent to the rotation speed at the time point t6 of Fig. 5 at which the complete explosion occurs. Because the starter relay R1 is turned on, the battery voltage Vb increases together with the inverter voltage Vi. The inverter voltage Vi reaches a V2 after the rotation speed of the engine 10 reaches the P1 and before the rotation speed of the engine 10 reaches the P2. The voltage V2 is the voltage suitable for charging the battery 7.

When the rotation speed of the engine 10 reaches the P2 and the complete explosion occurs, the charge relay R2 is turned on. The starter relay R1 and the charge relay R2 are turned on during a period from the time when the rotation speed of the engine 10 reaches the P2 and until the time when the rotation speed of the engine 10 reaches a P3. The rotation speed P3 is equivalent to the rotation speed acquired at the time point t7 of Fig. 5 at which the constant time period TM has elapsed since the complete explosion occurred. When the rotation speed of the engine 10 is in the range of not less than the P2 and not more than the P3 (the period from the time point t6 to the time point t7 of Fig. 5), the inverter voltage Vi is kept at the V2 by the weak magnetic field control as indicated by the two-dotted line. Even in this range, the duty ratio of the DC-DC converter 62 is kept at 0 or a value close to 0.

When the rotation speed reaches the P3 at the time point t7, the starter relay R1 is turned off. When the rotation speed of the engine 10 is in the range of not less than the P3 and not more than a P4, the duty ratio of the DC-DC convertor 62 is adjusted such that the copper loss in the starter/generator 20 is the minimum. For example, a map showing the relation between the rotation speed of the engine 10 and the duty ratio (hereinafter referred to as a rotation speed- duty ratio map) is stored in the storage in advance. The rotation speed- duty ratio map is set such that the copper loss in the starter/generator 20 is the minimum. The converter controller 35 of Fig. 3 acquires the duty ratio corresponding to the rotation speed detected by the rotation speed detector SE1 from the rotation speed- duty ratio map, and controls the DC-DC converter 62 by the duty ratio.

The rotation speed P4 is equivalent to the rotation speed at which the duty ratio of the DC-DC converter 62 reaches the upper limit value TH2. When the rotation speed of the engine 10 is in the range of not less than the P3 and not more than the P4, the voltage lowered by the DC-DC converter 62 is the battery voltage Vb. The weak magnetic field control is performed such that the battery voltage Vb is the V2.

When the rotation speed of the engine 10 is higher than the P4, the duty ratio of the DC-DC converter 62 is kept at the upper limit value TH2 of Fig. 5. Therefore, the ratio of the battery voltage Vb to the inverter voltage Vi is kept constant by the DC-DC converter 62, and the battery voltage Vb is kept at the V2 by the weak magnetic field control.

In this manner, the battery voltage Vb is adjusted by the weak field magnetic control, and the ratio of the battery voltage Vb to the inverter voltage Vi is adjusted by the voltage lowering operation of the DC-DC converter 62, whereby the battery voltage Vb can be appropriately adjusted while the copper loss due to the weak magnetic field current is decreased. Thus, power generation efficiency of the starter/generator 20 is improved.

### (6) Engine Start-up Process

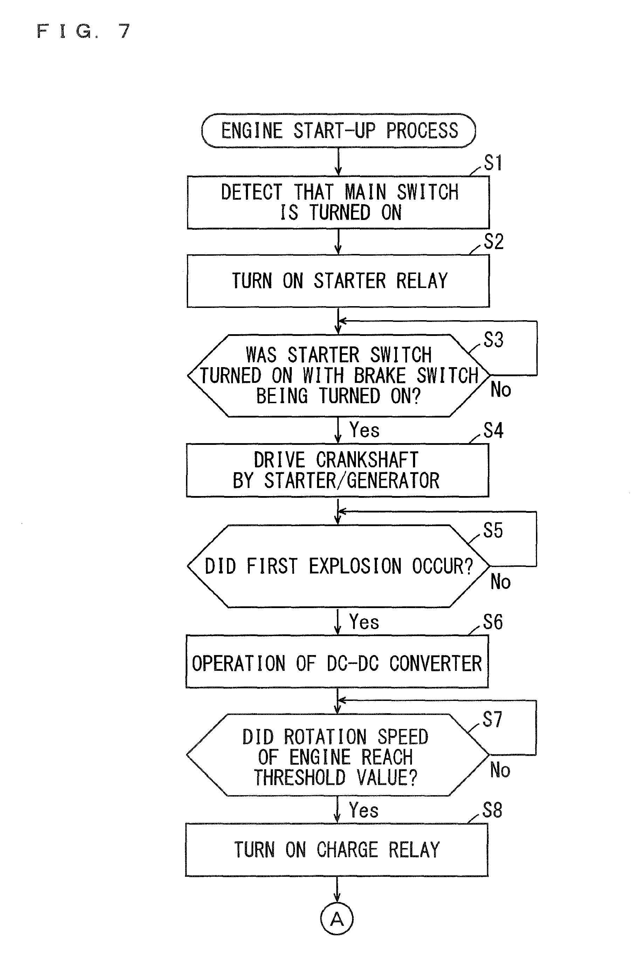

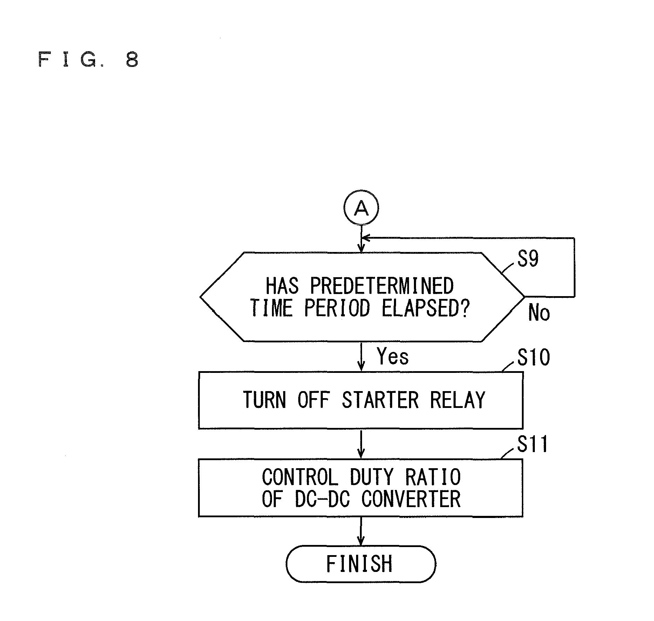

At the time of the start-up of the engine 10, the CPU 30 of Fig. 3 performs the engine start-up process based on the control program stored in the storage in advance. Figs. 7 and 8 are flow charts of the engine start-up process. The engine start-up process is started when the main switch SW1 of Fig. 2 is turned on, for example. In a vehicle in which the idle stop is automatically performed, the engine start-up process of Fig. 7 may be performed at the time of the re-start after the idle stop.

As shown in Fig. 7, when the main ON detector 31 detects that the main switch SW1 is turned on (step S1), a relay controller 23 controls the relay driving circuit 65 such that the starter relay R1 is turned on (step S2). Next, the start-up determination unit 32 determines whether or not the starter switch SW2 is turned on with the brake switch SW3 being turned on (step S3). When neither the starter switch SW2 nor the brake switch SW3 is turned on, or when the starter switch SW2 is turned on with the brake switch SW3 not being turned on, the start-up determination unit 32 repeats the process of step S3.

When the starter switch SW2 is turned on with the brake switch SW3 being turned on, the inverter controller 34 controls the inverter circuit 61 such that the crankshaft CS is driven by the starter/generator 20 (step S4). Specifically, as described above, the crankshaft CS is rotated reverse, whereby the pressure in the combustion chamber increases and the driving current increases. The torque supplied from the starter/generator 20 to the crankshaft CS is switched from the reverse rotation torque to the forward rotation torque based on the result of the detection by the current detector SE2. Thereafter, the operation of the engine 10 including exhaust, intake and compression is performed.

Next, the converter controller 35 determines whether or not the initial explosion of the engine 10 has occurred (step S5). Specifically, when the rotation speed of the engine 10 detected by the rotation speed detector SE1 reaches a predetermined value, it is determined that the initial explosion has occurred. Whether or not the initial explosion has occurred may be determined based on the driving current detected by the current detector SE2 instead of the rotation speed of the engine 10. For example, when the driving current becomes smaller than a predetermined value (0, for example), it may be determined that the initial explosion has occurred.

When the initial explosion has not occurred, the converter controller 35 repeats the process of step S5. When the initial explosion has occurred, the converter controller 35 operates the DC-DC converter 62 (step S6). In this case, the duty ratio of the DC-DC converter 62 is kept at 0 or a value close to 0.

Next, the relay controller 33 determines whether or not the rotation speed of the engine 10 has reached the predetermined threshold value TH1 (Fig. 5) based on the result of the detection by the rotation speed detector SE1 (step S7). When the rotation speed of the engine 10 is lower than the threshold value TH1, the relay controller 33 repeats the process of step S7. When the rotation speed of the engine 10 has reached the threshold value TH1, the relay controller 33 controls the relay driving circuit 65 such that the charge relay R2 is turned on (step S8).

Next, as shown in Fig. 8, the relay controller 33 determines whether or not the predetermined time period TM (Fig. 5) has elapsed since the charge relay R2 was turned on in step S7 (step S9). In a case in which the time period TM has not elapsed, the relay controller 33 repeats the process of step S9. In a case in which the time period TM has elapsed, the relay controller 33 controls the relay driving circuit 65 such that the starter relay R1 is turned off (step S10).

Next, the converter controller 35 controls the duty ratio of the DC-DC converter 62 such that the copper loss in the starter/generator 20 is the minimum (step S11). Thus, the engine start-up process is finished.

Thereafter, the inverter controller 34 controls the inverter circuit 61 and the converter controller 35 controls the DC-DC converter circuit 62 such that the battery voltage is the voltage V2. Thus, an appropriate voltage is stably supplied to the battery 7 and various loads.

### (7) Effects

In the motorcycle 100 according to the above-mentioned embodiment, the battery 7 is electrically connected to the inverter circuit 61 through the motor line L1 at the time of the start-up of the engine 10. In a state in which power is generated by the starter/generator 20 after the complete explosion of the engine 10, the battery 7 is electrically connected to the inverter circuit 61 through the generator line L2 including the DC-DC converter 62.

In this case, the voltage supplied from the inverter circuit 61 to the battery 7 and various loads after the complete explosion of the engine 10 is adjusted by the DC-DC converter 62. Thus, the battery voltage can be appropriately adjusted while an increase in the weak magnetic field current is inhibited. Therefore, the power generation efficiency by the starter/generator 20 can be improved.

Further, in the present embodiment, the starter relay R1 of the motor line L1 and the charge relay R2 of the generator line L2 can be respectively independently switched between on and off. Therefore, at the time of the stop of the engine 10, both of the starter relay R1 and the charge relay R2 are kept turned off. Thus, formation of a leak current path is prevented, and a decrease in a remaining amount of the battery 7 due to an occurrence of a leak current is prevented.

Further, when a power supply path between the inverter circuit 61 and the battery 7 is switched from the motor line L1 to the generator line L2, both of the starter relay R1 of the motor line L1 and the charge relay R2 of the generator line L2 are temporarily turned on. In this case, because there is no period in which the inverter circuit 61 and the battery 7 are electrically disconnected from each other, a temporary increase in the voltage of the starter/generator 20 is prevented. Therefore, it is not necessary to inhibit an increase in the voltage by the short brake (the short-circuit brake), for example, and the starter/generator 20 is prevented from fluctuating the rotation of the crankshaft CS.

Further, in the present embodiment, the load groups G1, G2 are connected to the generator line L2. Thus, the power generated by the starter/generator 20 can be continuously supplied to the load groups G1, G2. Therefore, even when a load dump (uncoupling of a battery) occurs, or when the rider turns off the main switch SW1 during the travelling of the motorcycle 100, a sharp increase in the voltage does not occur. Therefore, the inverter circuit 61 and the DC-DC converter 62 are prevented from being damaged.

Further, the load group G1 that is not involved in the operation of the engine 10 is connected between the DC-DC converter 62 and the charge relay R2, and the load group G2 that is involved in the operation of the engine 10 is connected between the charge relay R2 and the battery 7. In this case, when the charge relay R2 is turned off with power being generated by the starter/generator 20, the supply of power to the load group G2 is stopped while power is continuously supplied to the load group G1. Thus, unstable operation of the engine 10 is prevented, and a sharp increase in the voltage is prevented by the supply of power to the load group G1.

### (8) Other Embodiments

### (8-1)

While both of the starter relay R1 and the charge relay R2 are temporarily turned on in a case in which the power supply path between the inverter circuit 61 and the battery 7 is switched from the motor line L1 to the generator line L2 in the above-mentioned embodiment, the present invention is not limited to this. When an increase in the voltage in the starter/generator 20 is prevented or when its effect is subtle, the starter relay R1 may be turned off simultaneously as the charge relay R2 is turned on.

### (8-2)

While the charge relay R2 of the generator line L2 is turned on in a case in which the rotation speed of the crankshaft CS exceeds the predetermined threshold value TH1 in the above-mentioned embodiment, the charge relay R2 may be turned on at another time point. For example, the charge relay R2 may be turned on at a time point at which the driving current becomes lower than a constant value (0, for example), or the charge relay R2 may be turned on at a time point at which a constant time period has elapsed since the initial explosion of the engine 10 occurs.

### (8-3)

While the starter relay R1 of the motor line L1 is turned off at a time point at which a constant time period has elapsed since the charge relay R2 of the generator line L2 was turned on in the above-mentioned embodiment, the starter relay R1 may be turned off at another time point. For example, the starter relay R1 may be turned off at a time point at which the rotation speed of the engine 10 reaches a constant value higher than the threshold value TH1 of Fig. 5, or the starter relay R1 may be turned off when the charge relay R2 is turned on as described above.

### (8-4)

While the duty ratio of the DC-DC converter 62 is increased since the charge relay R2 of the generator line L2 was turned on and the starter relay R1 of the motor line L1 was turned off in the above-mentioned embodiment, the present invention is not limited to this. When the battery voltage can be appropriately adjusted or when its effect caused by variations in the battery voltage is subtle, the duty ratio of the DC-DC converter 62 may be increased at another time point. For example, the duty ratio of the DC-DC converter 62 may be increased when the charge relay R2 is turned on, or the duty ratio of the DC-DC converter 62 may be increased after a constant time period has elapsed since the starter relay R1 was turned off.

### (8-5)

While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a saddle-straddling type motor vehicle, the engine 10 is an example of an engine, the starter/generator 20 is an example of a starter/generator, the battery 7 is an example of a battery, the inverter circuit 61 is an example of an inverter circuit, the motor line L1 is an example of a first path, the generator line L2 is an example of a second path, the DC-DC converter 62 is an example of a DC-DC converter, the starter relay R1 is an example of a first switch, the charge relay R2 is an example of a second switch and the load group G1 is an example of a load.

Further, the main switch SW1 is an example of a main switch, the CPU 30 is an example of a switching controller and a converter controller, the time point t2 is an example of a first time point, the time point t6 is an example of a second time point, the time point t7 is an example of a third time point, the rotation speed detector SE1 is an example of a rotation speed detector.

As each of constituent elements recited in the claims, various other elements having configurations or functions described in the claims can be also used.

### INDUSTRIAL APPLICABILITY

The present invention can be effectively utilized for various types of saddle-straddling type motor vehicles.

## Claims

1. A start-up/power generation system of a saddle-straddling type motor vehicle, comprising:
an engine (10);
a starter/generator (20) having a function for rotating a crankshaft (CS) of the engine (10) and a function for generating power by a rotation of the crankshaft (CS);
a battery (7);
an inverter circuit (61) connected to the starter/generator (20);
a first path (L1) for supplying power from the battery (7) to the inverter circuit (61);
a second path (L2) for supplying power from the inverter circuit (61) to the battery (7);
a DC-DC converter (62) that is provided at the second path (L2) and is configured to adjust a voltage supplied from the inverter circuit (61) to the battery (7);
a first switch (R1) that is provided at the first path (L1) and is configured to be switched between a connected state in which the battery (7) is electrically connected to the inverter circuit (61) and a disconnected state in which the battery (7) is electrically disconnected from the inverter circuit (61);
a second switch (R2) that is provided at the second path (L2) and is configured to be switched between a connected state in which the battery (7) is electrically connected to the inverter circuit (61) and a disconnected state in which the battery (7) is electrically disconnected from the inverter circuit (61); and
a load (G1) that is electrically connected to the second path (L2).

2. The start-up/power generation system of the saddle-straddling type motor vehicle according to claim 1, further comprising a main switch (SW1) operable by a rider, wherein
the DC-DC converter (62) is connected between the inverter circuit (61) and the second switch (R2), and
both of the first switch (R1) and the second switch (R2) are kept in the disconnected state with the main switch (SW1) being turned off.

3. The start-up/power generation system of the saddle-straddling type motor vehicle according to claim 1 or 2, further comprising a switching controller (30) that is configured to control the first switch (R1) and the second switch (R2), wherein
the switching controller (30) is configured to control the first switch (R1) and the second switch (R2) such that the first switch (R1) is kept in the connected state and the second switch (R2) is kept in the disconnected state from a first time point at which the engine (10) is started to a second time point at which a predetermined first condition is satisfied, both of the first switch (R1) and the second switch (R2) are kept in the connected state from the second time point to a third time point at which a predetermined second condition is satisfied, and the first switch (R1) is kept in the disconnected state and the second switch (R2) is kept in the connected state from the third time point.

4. The start-up/power generation system of the saddle-straddling type motor vehicle according to claim 3, further comprising a rotation speed detector (SE1) that detects a rotation speed of the crankshaft (CS), wherein
the first condition is that the rotation speed detected by the rotation speed detector (SE1) reaches a predetermined value.

5. The start-up/power generation system of the saddle-straddling type motor vehicle according to claim 3 or 4, wherein
the second condition is that a predetermined time period has elapsed since the second time point.

6. The start-up/power generation system of the saddle-straddling type motor vehicle according to any one of claims 3 to 5, further comprising a converter controller (30) for adjusting a duty ratio of the DC-DC converter (62) such that a copper loss in the starter/generator (20) decreases from the third time point.

7. The start-up/power generation system of the saddle-straddling type motor vehicle according to any one of claims 1 to 6, wherein
the load (G1) is connected to the second path (L2) between the DC-DC converter (62) and the second switch (R2).

8. The start-up/power generation system of the saddle-straddling type motor vehicle according to claim 7, wherein
the load (G1) is not involved in operation of the engine (10).
